# EUROPÄISCHE PATENTSCHRIFT

(11) **EP 2 399 112 B1**
(45) Veröffentlichungstag und Bekanntmachung des Hinweises auf die Patenterteilung: **26.06.2013**
(21) Anmeldenummer: 10702687.4
(22) Anmeldetag: 05.02.2010
(51) Int. Cl.: G01M 3/20

(54) **SCHNÜFFELLECKSUCHER**
SNIFFING LEAK DETECTOR
DETECTEUR DE FUITES PAR RENIFLAGE

(30) Priorität: 21.02.2009 DE 102009010064
(43) Veröffentlichungstag der Anmeldung: 28.12.2011
(73) Patentinhaber: Inficon GmbH, 50968 Köln (DE)
(72) Erfinder: WETZIG, Daniel, 50999 Köln (DE)
(74) Vertreter: von Kreisler Selting Werner
(86) Internationale Anmeldenummer: PCT/EP2010/051427
(87) Internationale Veröffentlichungsnummer: WO 2010/094582

(56) Entgegenhaltungen:
- EP-A1- 0 344 345
- DE-A1- 3 715 452
- DE-A1- 4 140 366
- DE-A1-102006 047 856
- DE-A1-102006 056 215

## Beschreibung

Die Erfindung betrifft einen Schnüffellecksucher mit einer Schnüffelleitung, einer mit der Schnüffelleitung über eine Drossel verbundenen Vakuumpumpe und einem Prüfgassensor, wobei stromauf von der Drossel ein Verteilpunkt gebildet ist, von dem ein Abzweig zu dem Prüfgassensor führt.

Ein Schnüffelleckersucher dieser Art ist beschrieben in DE 10 2006 047 856 A1 (INFICON GmbH). Er weist eine Schnüffelleitung auf, die am Ende mit einer Schnüffelsonde versehen ist. Das Gerät enthält am Einlass eine Drossel, damit beim Abziehen der Schnüffelleitung verhindert wird, dass an einem Verteilpunkt der volle Atmosphärendruck entsteht. Vom Verteilpunkt führt eine Leitung, die eine Drossel enthält, zu dem Einlass einer Vakuumpumpe. Die Drossel bestimmt die Saugleistung für den Normal-Betriebsmodus. Sie ist durch eine Bypassleitung überbrückt, die ein Ventil enthält. Der Prüfgassensor ist ein Partialdrucksensor, wie er in DE 100 31 882 A1 beschrieben ist. Dieser Partialdrucksensor weist einen Raum auf, der mit einer selektiv für ein Prüfgas (Helium) durchlässigen Membran geschlossen ist. Im Innern des Raumes befindet sich ein Penning-Drucksensor oder ein anderer Drucksensor, der ein elektrisches Signal erzeugt, welches den Druck angibt. Aus diesem Druck wird das Signal für die detektierte Menge an Prüfgas abgeleitet.

Bekannt sind ferner Schnüffellecksucher, die als Prüfgassensor ein Massenspektrometer enthalten. Für den Betrieb des Massenspektrometers ist ein Hochvakuum erforderlich. Daher wird eine aufwendige Hochvakuumpumpe benötigt. In beiden Arten von Prüfgassensoren ist die Nachweisempfindlichkeit von dem Zwischendruck (Totaldruck) im Einlassbereich des Prüfgassensors abhängig. Deshalb ist die Nachweisgrenze bei einem Schnüffellecksucher von der Totaldruckstabilität am Verteilpunkt bzw. am Nachweiseinlass begrenzt.

Bei einem Helium-Schnüffellecksucher werden Totaldruckänderungen sofort ersichtlich, weil bereits durch das Grundsignal des Systems, verursacht durch das Lufthelium, Änderungen des Messsignals verursacht werden. Bei Kältemittellecksuchern, bei denen als Prüfgas Kältemittel benutzt wird, ist der Einfluss der Totaldruckstabilität nur beim Messen der Leckrate offensichtlich, weil die Luft in der Regel frei von Kältemittel ist.

Der Totaldruck (Zwischendruck) am Verteilpunkt ist gegeben aus Fluss durch die Förderleitung und das Saugvermögen der fördernden Vakuumpumpe. Der Totaldruck, der sich beim Betrieb einer bestimmten Vakuumpumpe einstellt, ist weder exakt vorherbestimmbar noch konstant. Er kann sich während des Pumpenbetriebes sprungartig ändern. Insbesondere, wenn als Vakuumpumpe eine Membranpumpe benutzt wird, können derartige Druckänderungen eintreten. Die Totaldruckänderungen beeinflussen die Nachweisempfindlichkeit des Schnüffellecksuchers. Wenn der Totaldruck relativ hoch ist, ist auch der Partialdruck des Prüfgases hoch. Demnach ergibt sich eine hohe Nachweisempfindlichkeit. Bei niedrigem Totaldruck ist die Nachweisempfindlichkeit entsprechend geringer.

Der Erfindung liegt die Aufgabe zugrunde, einen Schnüffellecksucher zu schaffen, bei dem die Nachweisempfindlichkeit nicht durch Schwankungen des Saugvermögens der Vakuumpumpe beeinträchtigt wird.

Der erfindungsgemäße Schnüffellecksucher ist durch den Patentanspruch 1 definiert. Er ist dadurch gekennzeichnet, dass die zwischen der Schnüffelleitung und der Vakuumpumpe hinter dem Verteilpunkt vorgesehene Drossel eine Lochblende ist, deren Leitwert derart bemessen ist, dass der Druckabfall an der Lochblende größer als P₂/2 ist, wobei P₂ der Zwischendruck am Verteilpunkt ist.

Erfindungsgemäß wird die Gasströmung auf dem Weg von der Schnüffelleitung zur Vakuumpumpe mit einer Lochblende verblockt. Bei einer verblockten Strömung ist der Fluss unabhängig vom Niederdruck an der Auslassseite der Lochblende. Dies bedeutet, dass bei Änderungen des Pumpendrucks am Einlass der Vakuumpumpe der Durchfluss durch die Lochblende nicht verändert wird. Daher wird auch der Druck auf der Eintrittsseite der Lochblende nicht verändert. Dies bedeutet, dass auftretende Druckänderungen vor der Vakuumpumpe keine Auswirkung auf die Empfindlichkeit und die Signalstabilität zeigen und die Systemempfindlichkeit unabhängig vom Druck vor der Vakuumpumpe ist.

Erfindungsgemäß ist die Drossel eine Lochblende, wobei die Länge L der Lochblende kleiner ist als der Lochdurchmesser D. Im Unterschied zu einer Drossel, die einen Kapillarkanal aufweist, hat eine Lochblende die Wirkung, dass der Fluss unabhängig vom Niederdruck ist. Eine derartige Wirkung tritt bei anderen Typen von Drosseln nicht auf.

Die Bemessungsangabe, wonach der Druckabfall an der Lochblende größer als P₂/2 ist, bedeutet anders ausgedrückt, dass der Leitwert L_{B} der Lochblende kleiner ist als die Hälfte des Saugvermögens S der Vakuumpumpe. Durch Verwendung einer Lochblende mit hohem Strömungswiderstand (= niedrigem Leitwert) entsteht in der Kurve, die die Abhängigkeit des Flusses vom Pumpendruck angibt, ein horizontaler Abschnitt für niedrige Pumpendrücke. Im Bereich dieses horizontalen Abschnitts arbeitet der erfindungsgemäße Schnüffellecksucher.

Der Prüfgassensor des Schnüffellecksuchers kann ein Partialdrucksensor oder ein Massenspektrometer sein. Im Falle eines Partialdrucksensors, z. B. in Wise-Technology der Firma Inficon GmbH, kann der Partialdruck des Prüfgases ohne Hochvakuumbedingungen ermittelt werden. Alternativ hierzu kann ein Massenspektrometer als Prüfgassensor verwendet werden, bei dem ein kleiner Teil des von der Vakuumpumpe geforderten Gases in einen Hochvakuumbereich abgezweigt und zu der Analyseeinheit geführt wird. Auch hier wird durch die Lochblende der Totaldruck am Einlass der Analyseeinheit konstant gehalten.

Im Folgenden wird unter Bezugnahme auf die Zeichnungen ein Ausführungsbeispiel der Erfindung näher erläutert.

Es zeigen:
- Fig. 1: eine schematische Darstellung eines Schnüffellecksuchers mit Partialdrucksensor nach der Erfindung,
- Fig. 2: eine schematische Darstellung eines Schnüffellecksuchers mit Massenspektrometer nach der Erfindung,
- Fig. 3: eine schematische Darstellung des Schnüffellecksuchers mit Angabe der Druckparameter,
- Fig. 4: einen Längsschnitt durch die Lochblende und
- Fig. 5: eine graphische Darstellung der Abnahme des Flusses mit zunehmendem Pumpendruck am Einlass der Vakuumpumpe bei einem Zwischendruck P₂ von 300 mbar.

An eine Schnüffelsonde 10 ist eine Schnüffelleitung 11 angeschlossen, die als Kapillarleitung ausgebildet ist. Am Einlass 12 der Schnüffelsonde 10 herrscht Atmosphärendruck von etwa 1000 mbar. Der Fluss Q durch die Schnüffelleitung beträgt beispielsweise 100 sccm (Standard Kubikzentimeter pro Minute). Die Schnüffelleitung führt zu dem Prüfgassensor 15, der hier als Partialdrucksensor gemäß DE 100 31 882 A1 ausgebildet ist. Am Einlass des Prüfgassensors herrscht ein Druck p von etwa 250 mbar. Zwischen dem Prüfgassensor 15 und einer Vakuumpumpe 16 läuft eine Förderleitung 17, in der sich die Drossel D2 befindet. Die Eintrittsseite der Drossel D2 ist mit einem Druckmesser 18 verbunden. Die Vakuumpumpe 30 besteht beispielsweise aus einer zweistufigen Membranpumpe.

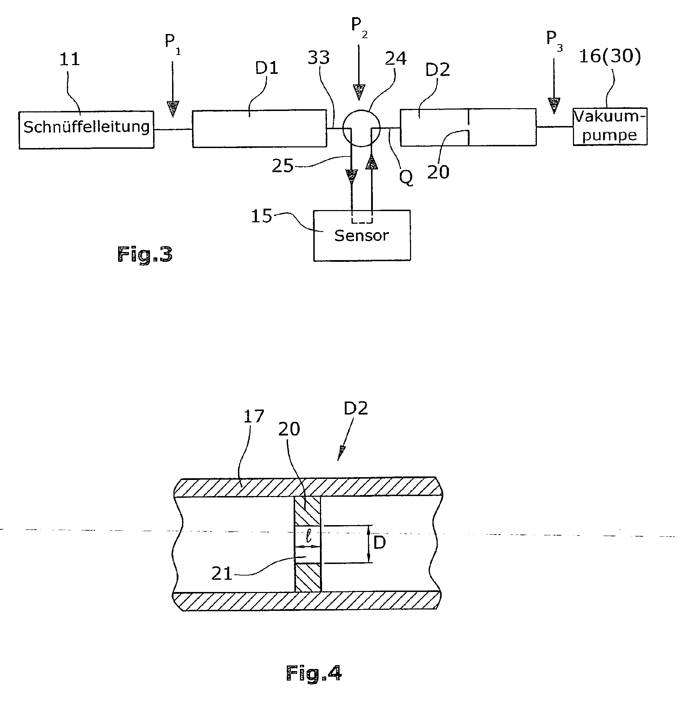

Die Gestaltung der Drossel D2 ist in Figur 4 dargestellt. Die Drossel besteht aus einer Lochblende 20 aus einer ebenen Wand, die quer in der Saugleitung 17 angeordnet ist. Die Lochblende 20 enthält ein Loch 21, das beispielsweise kreisrund ist. Die Länge L der Lochblende in Strömungsrichtung, d. h. die Stärke der Wand, ist kleiner als der Durchmesser D des Lochs 21.

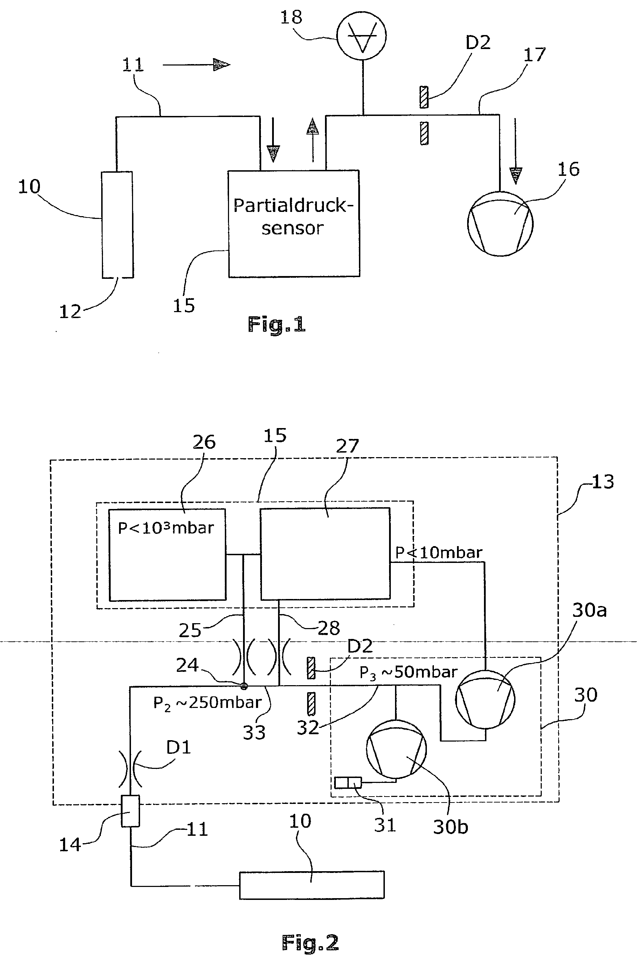

Figur 2 zeigt einen Schnüffellecksucher mit Massenspektrometer. Eine Schnüffelsonde 10 ist über eine Schnüffelleitung 11 mit dem Gehäuse 13 des Schnüffellecksuchers verbunden, wobei eine Steckverbindung 14 vorgesehen ist. Im Gehäuse 13 befindet sich eine Drossel D1 in Form einer Einlassblende, die verhindert, dass beim Lösen der Steckverbindung 14 der Druck in der Saugleitung auf Atmosphärendruck ansteigt.

Die Einlassleitung führt zu einem Verteilpunkt 24. Von diesem führt eine Abzweigleitung 25, die eine Drossel enthält, zu dem Massenspektrometer 26. Das Massenspektrometer benötigt für seinen Betrieb ein Hochvakuum. Dieses wird von einer Turbomolekularpumpe 27 erzeugt. Diese weist einen Zwischeneinlass auf, der über eine Leitung 28 mit Drossel mit dem Verteilpunkt 24 verbunden ist. Der Druckauslass der Turbomolekularpumpe 27 ist mit einer Vorvakuumpumpe 30 verbunden, die im vorliegenden Fall zweistufig ausgebildet ist. Der Druckauslass 31 führt in die Atmosphäre. Ein Zwischeneinlass 32 zwischen den beiden Stufen 30a und 30b der Vorvakuumpumpe 30 ist mit dem Verteilpunkt 24 in der Förderleitung 33 verbunden. Bei diesem Ausführungsbeispiel bilden das Massenspektrometer 26 und die Turbomolekularpumpe 27 den Prüfgassensor 15.

Am Verteilpunkt 24 herrscht der Zwischendruck P₂. Am Zwischeneinlass 32 der Vorvakuumpumpe 30 herrscht der Pumpendruck P3.

Figur 3 ist eine vereinfachte Darstellung der Geräte nach den Figuren 1 und 2. Auf die Schnüffelleitung 11 folgt die Drossel D1. Daran schließt sich die Förderleitung 33 an. An dem Verteilpunkt 24 der Förderleitung 33 zweigt ein Abzweig 25 mit Hin- und Rückleitung zum Prüfgassensor 15 ab. Der am Verteilpunkt 24 herrschende Druck ist der Zwischendruck P₂ oder Totaldruck.

Vom Verteilpunkt 24 führt die Förderleitung 33 durch die Drossel D2 und von dort zu der Vakuumpumpe 16 oder 30.

Das Ziel der Erfindung besteht darin, den Zwischendruck P₂ am Verteilpunkt 24 möglichst konstant zu halten, unabhängig von etwaigen Schwankungen des Pumpendrucks P₃ oder des Saugvermögens der Vakuumpumpe. Dies geschieht mit der Drossel D2, die als Lochblende 20 ausgebildet ist.

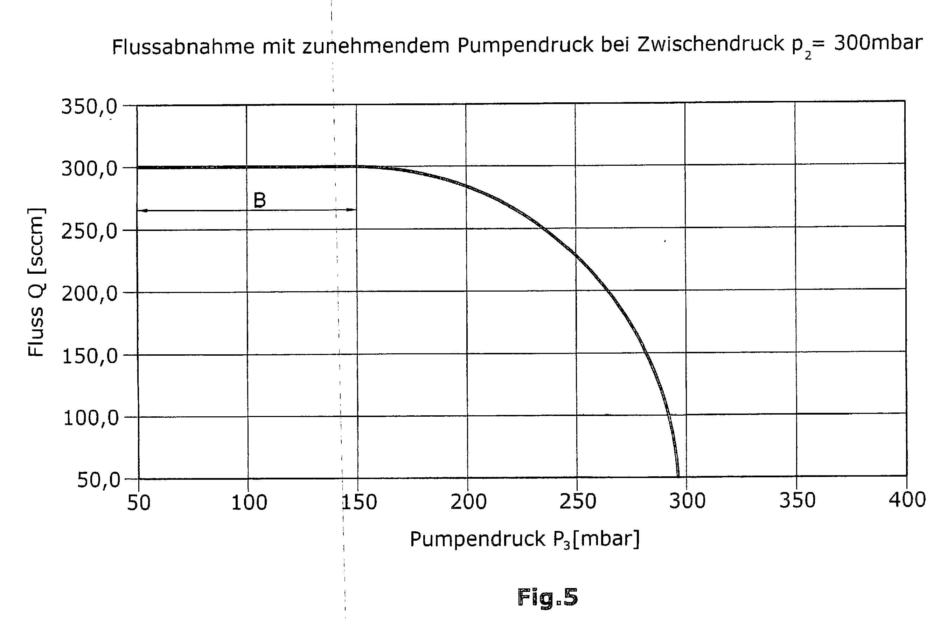

In Figur 5 ist der Fluss Q, der sich unter der Wirkung der Lochblende in der Förderleitung ergibt, in Abhängigkeit von dem Pumpendruck P3 dargestellt. Man erkennt, dass in einem Verblockungsbereich B, der von einem Pumpendruck P₃ von 50 - 150 mbar reicht, der Fluss Q und damit der Druck P2 konstant ist, unabhängig von Änderungen des Pumpendrucks P₃. Bei höheren Pumpendrücken nimmt der Fluss Q entsprechend der dargestellten Kurve ab. Durch die Wirkung der Lochblende, deren Druckabfall größer ist als P₂/2, wird erreicht, dass ein Betrieb ausschließlich im Verblockungsbereich B erfolgt.

## Patentansprüche

1. Schnüffellecksucher mit einer Schnüffelleitung (11), einer mit der Schnüffelleitung über eine Drossel (D2) verbundene Vakuumpumpe (16; 30) und einem Prüfgassensor (15), wobei stromauf von der Drossel (D2) ein Verteilpunkt (24) gebildet ist, von dem ein Abzweig (25) zu dem Prüfgassensor (15) führt,
**dadurch gekennzeichnet,**
**dass** die Drossel (D2) eine Lochblende (20) ist, deren Leitwert derart bemessen ist, dass der Druckabfall an der Lochblende (20) größer als P₂/2 ist, wobei P₂ der Zwischendruck am Verteilpunkt (24) ist.

2. Schnüffellecksucher nach Anspruch 1, **dadurch gekennzeichnet, dass** der Leitwert L_{B} der Lochblende (20) kleiner ist als die Hälfte des Saugvermögens (S) der Vakuumpumpe (16; 30).

3. Schnüffellecksucher nach Anspruch 1 oder 2, **dadurch gekennzeichnet, dass** die Länge (L) der Lochblende (20) kleiner ist als der Lochdurchmesser (D).

4. Schnüffellecksucher nach einem der Ansprüche 1 - 3, **dadurch gekennzeichnet, dass** der Prüfgassensor (15) ein Partialdrucksensor ist.

5. Schnüffellecksucher nach einem der Ansprüche 1 - 3, **dadurch gekennzeichnet, dass** der Prüfgassensor ein Massenspektrometer ist.

## Claims

1. A sniffing leak detector comprising a sniffing line (11), a vacuum pump (16; 30) connected to the sniffing line via a throttle (D2), and a test gas sensor (15), with a distribution point (24) being formed upstream of the throttle (D2) and having a branch line (25) leading therefrom to the test gas sensor (15),
**characterized in**
**that** the throttle (D2) is an orifice (20) having such a conductance value that the pressure drop at the orifice (20) is larger than P₂/2, with P₂ being the intermediate pressure at the distribution point (24).

2. The sniffing leak detector according to claim 1, **characterized in that** the conductance value L_{B} of the orifice (20) is smaller than half the pumping speed (S) of the vacuum pump (16; 30).

3. The sniffing leak detector according to claim 1 or 2, **characterized in that** the length (L) of the orifice (20) is smaller than the orifice diameter (D).

4. The sniffing leak detector according to any one of claims 1 - 3, **characterized in that** said test gas sensor (15) is a partial pressure sensor.

5. The sniffing leak detector according to any one of claims 1 - 3, **characterized in that** said test gas sensor is a mass spectrometer.

## Revendications

1. Détecteur de fuites par reniflage, comprenant une conduite de reniflage (11), une pompe à vide (16 ; 30) reliée à la conduite de reniflage par l'intermédiaire d'un étranglement (D2) et un capteur de gaz de contrôle (15), un point de distribution (24) étant formé en amont de l'étranglement (D2), duquel part une dérivation (25) vers le capteur de gaz de contrôle (15),
**caractérisé en ce que**
l'étranglement (D2) est un disque perforé (20) dont la conductance est dimensionnée de façon que la chute de pression au niveau du disque perforé (20) soit supérieure à P₂/2, P₂ étant la pression intermédiaire au point de distribution (24).

2. Détecteur de fuites par reniflage selon la revendication 1, **caractérisé en ce que** la conductance L_{B} du disque perforé (20) est inférieure à la moitié de la capacité d'aspiration (S) de la pompe à vide (16 ; 30).

3. Détecteur de fuites par reniflage selon la revendication 1 ou 2, **caractérisé en ce que** la longueur (L) du disque perforé (20) est inférieure au diamètre de trou (D).

4. Détecteur de fuites par reniflage selon l'une des revendications 1 à 3, **caractérisé en ce que** le détecteur de gaz de contrôle (15) est un capteur de pression partielle.

5. Détecteur de fuites par reniflage selon l'une des revendications 1 à 3, **caractérisé en ce que** le détecteur de gaz de contrôle est un spectromètre de masse.
